# EUROPEAN PATENT SPECIFICATION

(11) **EP 3 044 459 B1**
(45) Date of publication and mention of the grant of the patent: **29.04.2020**
(21) Application number: 14790359.5
(22) Date of filing: 04.09.2014
(51) Int. Cl.: F03D 5/00, F03D 7/00

(54) **POWER KITE CONTROL**
KONTROLLE EINES LEISTUNGDRACHENS
CONTRÔLE POUR CERF-VOLANT DE PUISSANCE

(30) Priority: 13.09.2013 IT TO20130752
(43) Date of publication of application: 20.07.2016
(73) Proprietor: Kite Gen Research S.R.L., 10099 San Mauro Torinese (TO) (IT)
(72) Inventor: IPPOLITO, Massimo, I-10099 San Mauro Torinese (TO) (IT)
(74) Representative: Garavelli, Paolo
(86) International application number: PCT/IT2014/000231
(87) International publication number: WO 2015/037024

(56) References cited:
- DE-U1-202006 005 389
- US-A- 5 155 375
- US-A1- 2009 033 098
- US-A1- 2013 075 523
- US-B1- 6 254 034

## Description

The present invention refers to a process for managing, adjusting and controlling a high-altitude wind generator.

Wind generators are known in the art, which are equipped with systems for adjusting and controlling the working conditions of the generator itself when the wind speed changes.

In particular, a power control system is known, which is suitable to optimize the power delivered by a wind generator depending on wind speed, by checking the surface exposed to winds of wings rotating around their own axis, or through a braking system suitable to reduce the rotation speed of the rotor of a generator down to the maximum tolerated wind threshold: when such maximum threshold is exceeded, the system enters in a protection status and ensures the integrity of the generator and of its parts through a complete stop of the rotor and/or a misalignment between rotor axis and wing rotation axis.

Electric energy wind generators are also known, which exploit the flight of kites, such as those, for example, disclosed in WO2008004261, WO2007122650, EP1672214, WO2008120257, DE202006005389 U1, US2009/033098 A1: such generators generally exploit control systems comprising detecting means placed on board of such kites, however resulting scarcely efficient and accurate. Alternatively or additionally, control systems are known, which are placed on the ground and are suitable to detect information about the relative position of such kites, the direction and intensity of a wind current inside which the kite is immersed, but do not guarantee an efficient and accurate management of the operation of the related generator: an example of such systems is disclosed, in particular, in WO2008072269.

Therefore, object of the present invention is solving the above prior art problems, by providing a process for managing, adjusting and controlling a high-altitude wind generator, which is more efficient with respect to what is proposed by the known prior art.

The above and other objects and advantages of the invention, as will result from the following description, are obtained by a process for managing, adjusting and controlling a high-altitude wind generator as claimed in Claim 1. Preferred embodiments and non-trivial variations of the present invention are the subject matter of the dependent claims.

It is intended that all enclosed claims are an integral part of the present description.

It will be immediately obvious that numerous variations and modifications (for example related to shape, sizes, arrangements and parts with equivalent functionality) could be made to what is described, without departing from the scope of the invention, which is defined by the appended claims.

The present invention will be better described by some preferred embodiments thereof, provided as a non-limiting example, with reference to the enclosed drawings, in which:
- Figure 1 shows a graph used by the process according to the present invention related to the behavior of power emitted by a wind generator as function of the wind speed, and to the behavior of power emitted by a known high-altitude wind generator;
- Figure 2 shows a graph used by the process according to the present invention related to the behavior of tension exerted by the wind generator as function of the wind speed, and to the behavior of tension exerted by a known high-altitude wind generator; and
- Figure 3 shows a graph used by the process according to the present invention related to the behavior of cable unwinding speed of the wind generator as function of the wind speed, and to the behavior of cable unwinding speed of a known high-altitude wind generator.

In particular, as can be seen and described below in more detail, the process according to the present invention for managing, adjusting and controlling at least one high-altitude wind generator, of the type preferably comprising at least one kite operatively connected through driving cables to winches or other mechanisms for controlling the flight of such kite, is implemented through a system, of the type substantially known in the art, comprising:
- at least one detecting means, such as for example at least one speed sensor or other similar means, adapted to detect at least one speed value of the wind inside which the kites of such generator are immersed;
- at least one acquiring means, such as for example at least one digital acquiring system adapted to be interfaced with the detecting means and to acquire their detected wind speed value;
- at least one processing means, such as for example a processor, adapted to compare such wind speed value detected by such detecting means with preset wind speed values and to process such comparison generating at least one control command to be sent to at least one control means;
- at least one control means adapted to receive such control command from the processing means and to activate at least one first actuating motor adapted to exert an unwinding-rewinding action on the respective command mechanisms of such driving cables connected to the generator kites.

In particular, the process according to the present invention advantageously comprises the steps of:
a) providing at least one first graph 1 of power values (along the ordinate) emitted by such generator depending on wind speed values (along the abscissa);
b) providing at least one second graph 2 of tension values (along the ordinate) exerted by such generator suitable to move the driving cables connected to the generator kites depending on wind speed values (along the abscissa);
c) providing at least one third graph 3 of unwinding speed values of the cables (along the ordinate) on the respective command mechanisms of such generator depending on wind speed values (along the abscissa);
d) locating in each of such graphs 1, 2, 3 at least one first operating area A in which the wind speed values are included between a null wind speed and a minimum wind speed value (cut-in speed) 4, at least one second operating area B in which the wind speed values are included between such minimum wind speed value 4 and a preset maximum-tension wind speed value (full-force speed) 5, at least one third operating area C in which the wind speed values are included between such preset maximum-tension wind speed value 5 and at least one preset maximum-power wind speed value (full-power speed) 6 and at least one fourth operating area D in which the wind speed values are greater than such preset maximum-power wind speed value (full-power speed) 6;
e) defining the operating modes of such generator, each one of which depends on a respective one of such operating areas A, B, C, D;
f) detecting at least one wind speed value, for example through such detecting means, and sending such detected wind speed value to such processing means, preferably by interposing such acquiring means; and
g) comparing such detected wind speed value with such minimum wind speed value (cut-in speed) 4 and/or such preset maximum-tension wind speed value (full-force speed) 5 and/or such preset maximum-power wind speed value (full-power speed) 6 and imposing an operating mode to such generator depending on one of such operating areas A, B, C, D located by such speed value detected on the graphs 1, 2, 3.

In particular, the step e) comprises the sub-step of defining at least one first operating mode of the generator depending on the first operating area A, at least one second operating mode of the generator depending on the second operating area B, at least one third operating mode of the generator depending on the third operating area C and at least one fourth operating mode of the generator depending on the fourth operating area D.

In particular, the step g) comprises the sub-steps of:
- performing a first comparison between the detected wind speed value and the minimum wind speed value 4 on the graphs 1, 2, 3;
- if, from such first comparison, it results that the detected wind speed value is lower than the minimum wind speed value 4, selecting the first operating mode, and in particular generating at least one control command related to the first operating mode to be sent to the control means, to prevent the operation of the generator by imposing as null the emitted power value, the exerted tension value and the cable unwinding speed value, otherwise passing to the following step;
- if, from such first comparison, it results that the detected wind speed value is greater than the minimum wind speed value 4, performing a second comparison between the detected wind speed value and the preset maximum-tension wind speed value 5 on the graphs 1, 2, 3;
- if, from such second comparison, it results that the detected wind speed value is lower than the preset maximum-tension wind speed value 5, selecting the second operating mode, and in particular generating at least one control command related to the second operating mode to be sent to the control means, not to prevent the operation of the generator but, since there are not enough wind conditions to produce electric energy and to take care and unwinding the driving cables of the respective power kites, to impose as null the emitted power value and the cable unwinding speed value, and impose the exerted tension value lower than at least one rated tension value 8 preset on the second graph 2, otherwise passing to the following step;
- if, from such second comparison, it results that the detected wind speed value is greater than the preset maximum-tension wind speed value 5, performing a third comparison between the detected wind speed value and at least preset maximum-power wind speed value (full-power speed) 6 on the graphs 1, 2, 3 for which the generator reaches at least one preset, rated power value 7 on the first graph 1 and at least one preset, cable unwinding rated speed value 9 on the third graph 3;
- if, from such third comparison, it results that the detected wind speed value is lower than the preset maximum-power wind speed value 6, the generator is under suitable conditions to produce electric energy and to unwind the driving cables on their respective command mechanisms, and therefore selecting the third operating mode, and in particular generating at least one control command related to the third operating mode to be sent to the control means, to impose an emitted power value lower than the rated power value 7, impose an exerted tension value equal to the rated tension value 8, and impose a cable unwinding speed value lower than the rated speed value 9;
- if, from such third comparison, it results that the detected wind speed value is greater than the preset maximum-power wind speed value 6, the generator is suitable to produce electric energy and to unwind the driving cables at their maximum on their respective command mechanisms, and consequently selecting the fourth operating mode, and in particular generating at least one control command related to the fourth operating mode to be sent to the control means, to impose an emitted power value equal to and/or greater than the rated power value 7, an exerted tension value equal to the rated tension value 8, and a cable unwinding speed value equal to the rated speed value 9.

Possibly, the process according to the present invention can further comprise the step of controlling the excessive power emitted by the generator by decentering the positioning of the kites inside at least one wind window, suitably defined and located depending on the detected wind speed values.

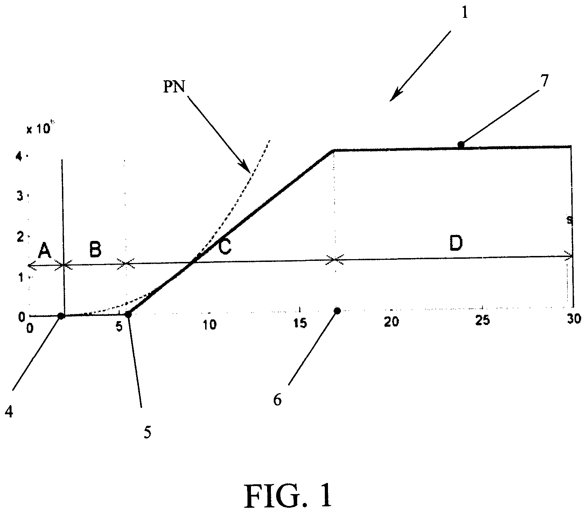

The graph shown in Figure 1, including the behavior of the power emitted by the wind generator as function of the wind speed values, also shows the behavior PN (with dashed line) of the power emitted by a known wind generator as function of the same wind speed values, and it is clear from the comparison of the two behaviors how the control process of the wind generator according to the present invention allows a more efficient and accurate management of the operation of such generator.

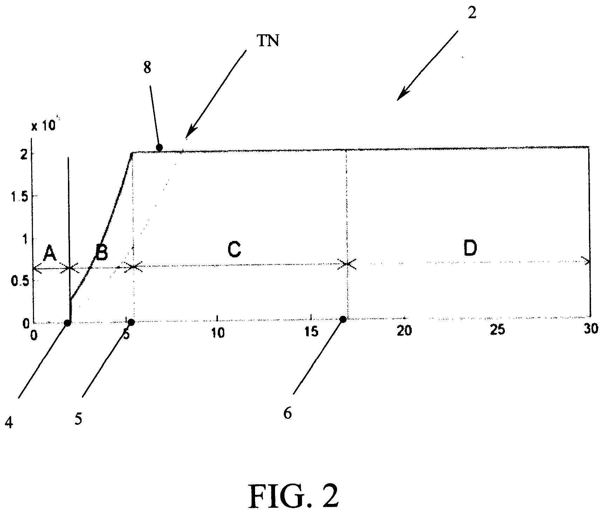

The graph shown in Figure 2, including the behavior of the tension exerted da the wind generator as function of the wind speed values, also shows the behavior TN (with dashed line) of the tension exerted by a known wind generator as function of the same wind speed values, and it is clear from the comparison of the two behaviors how the control process of the wind generator according to the present invention allows a more efficient and accurate management of the operation of such generator.

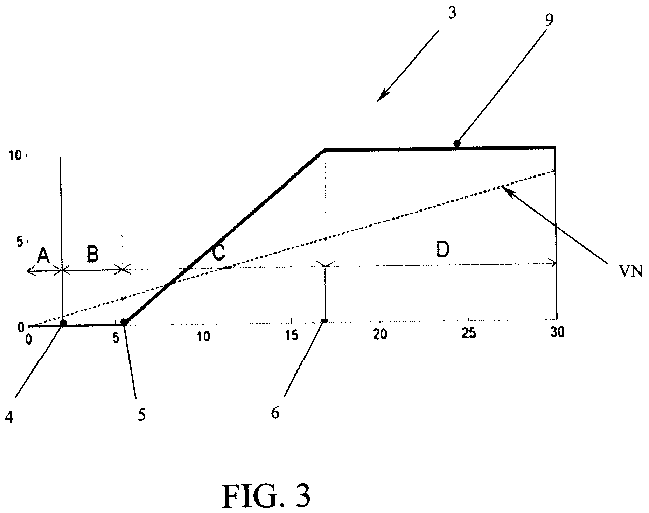

The graph shown in Figure 3, including the behavior of the unwinding speed of cables connected to the wind generator as function of the wind speed values, also shows the behavior VN (with dashed line) of the unwinding speed of cables connected to a known wind generator as function of the same wind speed values, and it is clear from the comparison of the two behaviors how the control process of the wind generator according to the present invention allows a more efficient and accurate management of the operation of such generator.

It is wholly clear that the present invention further refers to a computer program comprising computer program code means adapted to perform all or part of the steps of the above described process when such program is run by the processing means.

The process according to the present invention as described above therefore allows having at least the following advantages:
- ensuring a control of the operation of the high-altitude wind generator upon increasing the wind speed;
- ensuring the integrity of the components of the wind generator by performing a check of the power emitted in excess by the wind generator;
- efficiently controlling the operation of the wind generator depending on three parameters characterizing the wind generator itself as function of the wind speed, pointing out its operating areas.

## Claims

1. Process for managing, adjusting and controlling at least one high-altitude wind generator, of the type comprising at least one kite operatively connected through driving cables to winches or other mechanisms for controlling the flight of said kite, said process being implemented through a system comprising:
- at least one detecting means, adapted to detect at least one speed value of the wind inside which the kites of such generator are immersed;
- at least one acquiring means, adapted to be interfaced with the detecting means and to acquire their detected wind speed value;
- at least one processing means, adapted to compare such speed value detected by such detecting means with preset wind speed values and to process such comparison generating at least one control command to be sent to at least one control means;
- at least one control means adapted to receive such control command from the processing means and to activate at least one first actuating motor adapted to exert an unwinding-rewinding action on the respective command mechanisms of such driving cables connected to the generator kites;
**characterized in that** the process comprises the steps of:
a) providing at least one first graph (1) of power values emitted by said generator depending on speed values of the wind;
b) providing at least one second graph (2) of tension values exerted by said generator suitable to move said driving cables depending on speed values of the wind;
c) providing at least one third graph (3) of unwinding speed values of said cables depending on speed values of the wind;
d) locating in each of said graphs (1, 2, 3) at least one first operating area (A) in which said wind speed values are included between a null wind speed and a minimum wind speed value (4), at least one second operating area (B) in which said wind speed values are included between said minimum wind speed value (4) and a preset maximum-tension wind speed value (5), at least one third operating area (C) in which said wind speed values are included between said preset maximum-tension wind speed value (5) and at least one preset maximum-power wind speed value (6), and at least one fourth operating area (D) in which said wind speed values are greater than said preset maximum-power wind speed value (6);
e) defining operating modes of said generator, each one of said operating modes depending on a respective one of said operating areas (A, B, C, D) ;
f) detecting at least one wind speed value; and
g) comparing said detected wind speed value with said minimum wind speed value (4) and/or said preset maximum-tension wind speed value (5) and/or said preset maximum-power wind speed value (6) and imposing one of said operating modes to said generator depending on one of said operating areas (A, B, C, D) located by said wind speed value detected on said graphs (1, 2, 3), said step g) comprising the sub-steps of:
- performing a first comparison between said detected wind speed value and said minimum wind speed value (4) on said graphs (1, 2, 3);
- if, from said first comparison, it results that said detected wind speed value is lower than said minimum wind speed value (4), selecting said first operating mode to prevent an operation of said generator, imposing as null the emitted power value, the exerted tension value and the cable unwinding speed value, otherwise passing to the following step;
- if, from said first comparison, it results that said detected wind speed value is greater than said minimum wind speed value (4), performing a second comparison between said detected wind speed value and said preset maximum-tension wind speed value (5) on said graphs (1, 2, 3);
- if, from said second comparison, it results that said detected wind speed value is lower than said preset maximum-tension wind speed value (5), selecting said second operating mode not to prevent an operation of said generator but to impose null the emitted power value and the cable unwinding speed value and imposing the exerted tension value lower than at least one preset, rated tension value (8) on said second graph (2), otherwise passing to the following step;
- if, from said second comparison, it results that said detected wind speed value is greater than said preset maximum-tension wind speed value (5), performing a third comparison between said detected wind speed value with at least said preset maximum-power wind speed value (6) on said graphs (1, 2, 3) for which said generator reaches at least one preset, rated power value (7) on said first graph (1) and at least one preset, cable unwinding rated speed value (9) on said third graph (3);
- if, from said third comparison, it results that said detected wind speed value is lower than said preset maximum-power wind speed value (6), selecting said third operating mode to impose an emitted power value lower than said rated power value (7), impose an exerted tension value equal to said rated tension value (8), and impose a cable unwinding speed value lower than said rated speed value (9);
- if, from said third comparison, it results that said detected wind speed value is greater than said preset maximum-power wind speed value (6), selecting said fourth operating mode to impose an emitted power value equal to and/or greater than said rated power value (7), an exerted tension value equal to said rated tension value (8), and a cable unwinding speed value equal to said rated speed value (9).

2. Process according to the previous claim, **characterized in that** said step e) comprises the sub-step of defining at least one first operating mode of said generator depending on said first operating area (A), at least one second operating mode of said generator depending on said second operating area (B), at least one third operating mode of said generator depending on said third operating area (C), and at least one fourth operating mode of said generator depending on said fourth operating area (D).

3. Process according to any one of the previous claims, **characterized in that** it comprises the step of checking an excessive power emitted by said generator, decentering the positioning of said kites inside at least one wind window defined and located depending on said detected wind speed values.

## Patentansprüche

1. Verfahren für die Bedienung, Einstellung und Steuerung von mindestens einem hohen Windgenerator, der mindestens ein Flügelprofil enthält, das für den Betrieb durch Steuerzugstangen mit Seilwinden oder anderen Flugsteuermechanismen des genannten Flügelprofils verbunden ist, das genannte Verfahren wird durch ein System erweitert, das Folgendes enthält:
- mindestens eine Erkennungsvorrichtung, die dazu dient, mindestens einen Windgeschwindigkeitswert festzustellen, in dem die Flügelprofile eines solchen Generators enthalten sind;
- mindestens eine Erfassungsvorrichtung, die dazu dient, sich mit der Erkennungsvorrichtung zu verbinden und den festgestellten Geschwindigkeitswert zu erfassen;
- mindestens eine Verarbeitungsvorrichtung, die dazu dient, einen solchen Geschwindigkeitswert, der von einer solchen Erkennungsvorrichtung festgestellt wurde, mit den vorbestimmten Windgeschwindigkeitswerten zu vergleichen und einen solchen Vergleich zu verarbeiten, indem mindestens ein Steuerbefehl generiert wird, der an mindestens eine Steuervorrichtung gesendet werden muss;
- mindestens eine Steuervorrichtung, die dazu dient, einen solchen Steuerbefehl von der Verarbeitungsvorrichtung zu erhalten und mindestens einen ersten Antriebsmotor zu aktivieren, der dazu dient, eine Ab-/Aufwickelwirkung auf die entsprechenden Steuermechanismen solcher Steuerzugstangen auszuüben, die mit den Flügelprofilen des Generators verbunden sind;
und **dadurch gekennzeichnet ist, dass** das Verfahren folgende Phasen enthält:
a) mindestens eine erste Grafik (1) der Leistungswerte liefern, die durch den genannten Generator aufgrund der Windgeschwindigkeitswerte ausgegeben wird;
b) mindestens eine zweite Grafik (2) der Spannungswerte liefern, die durch den genannten Generator ausgeübt wird und für die Bewegung der genannten Steuerzugstangen aufgrund der Windgeschwindigkeitswerte geeignet ist;
c) mindestens eine dritte Grafik (3) der Abwickelgeschwindigkeitswerte der genannten Zugstangen aufgrund der Windgeschwindigkeitswerte liefern;
d) in jeder der genannten Grafiken (1, 2, 3) mindestens einen ersten Betriebsbereich (A) herausstellen, in dem die genannten Windgeschwindigkeitswerte zwischen einer Windgeschwindigkeit null und einem minimalen Geschwindigkeitswert (4) enthalten sind, mindestens einen zweiten Betriebsbereich (B), in dem die genannten Windgeschwindigkeitswerte zwischen dem genannten minimalen Geschwindigkeitswert (4) und einem vorbestimmten maximalen Spannungsgeschwindigkeitswert (5) enthalten sind, mindestens einen dritten Betriebsbereich (C), in dem die genannten Windgeschwindigkeitswerte zwischen dem genannten maximalen vorbestimmten Spannungsgeschwindigkeitswert (5) und mindestens einem vorbestimmten maximalen Leistungsgeschwindigkeitswert enthalten sind, und mindestens einen vierten Betriebsbereich (D), in dem die genannten Windgeschwindigkeitswerte höher als der genannte vorbestimmte maximale Leistungsgeschwindigkeitswert (6) sind;
e) Betriebsarten eines solchen Generators definieren, jede der genannten Betriebsarten erfolgt aufgrund eines entsprechenden genannten Betriebsbereiches (A, B, C, D);
f) mindestens einen Windgeschwindigkeitswert feststellen; und
g) den festgestellten genannten Windgeschwindigkeitswert mit dem genannten minimalen Geschwindigkeitswert (4) und/oder mit dem genannten vorbestimmten maximalen Spannungsgeschwindigkeitswert (5) und/oder dem genannten vorbestimmten maximalen Leistungsgeschwindigkeitswert (6) vergleichen, und dem genannten Generator aufgrund eines genannten Betriebsbereiches (A, B, C, D) eine genannte Betriebsart auferlegen, der durch den genannten Geschwindigkeitswert herausgestellt wird, der in den genannten Grafiken (1, 2, 3) festgestellt wird, die genannte Phase (g) enthält folgende Unterphasen:
- einen ersten Vergleich zwischen dem genannten festgestellten Geschwindigkeitswert und dem genannten minimalen Geschwindigkeitswert (4) in den genannten Grafiken (1, 2, 3) ausführen;
- wenn aus dem genannten ersten Vergleich hervorgeht, dass der genannte festgestellte Geschwindigkeitswert kleiner als der genannte minimale Geschwindigkeitswert (4) ist, die genannte erste Betriebsart auswählen, um einen Betrieb des genannten Generators zu verhindern und den ausgegebenen Leistungswert, den ausgeübten Spannungswert und den Abwickelgeschwindigkeitswert null aufzuerlegen, anderenfalls auf die nächste Phase wechseln;
- wenn aus dem genannten ersten Vergleich hervorgeht, dass der genannte festgestellte Geschwindigkeitswert höher als der genannte minimale Geschwindigkeitswert (4) ist, einen zweiten Vergleich zwischen dem genannten festgestellten Geschwindigkeitswert und dem genannten vorbestimmten maximalen Spannungsgeschwindigkeitswert (5) in den genannten Grafiken (1, 2, 3) ausführen;
- wenn aus dem genannten zweiten Vergleich hervorgeht, dass der genannte festgestellte Geschwindigkeitswert kleiner als der genannte maximale Spannungsgeschwindigkeitswert (5) ist, die genannte zweite Betriebsart auswählen, um den Betrieb des genannten Generators nicht zu verhindern, aber den ausgegebenen Leistungswert und den Abwickelgeschwindigkeitswert null aufzuerlegen, und den ausgeübten Spannungswert kleiner als mindestens einen vorbestimmten Nennspannungswert (8) auf der genannten zweiten Grafik aufzuerlegen, anderenfalls auf die nächste Phase wechseln;
- wenn aus dem genannten zweiten Vergleich hervorgeht, dass der genannte Geschwindigkeitswert größer als der genannte vorbestimmte maximale Spannungsgeschwindigkeitswert (5) ist, einen dritten Vergleich zwischen dem genannten festgestellten Geschwindigkeitswert mit mindestens dem genannten vorbestimmten maximalen Leistungsgeschwindigkeitswert (6) in den genannten Grafiken (1, 2, 3) ausführen, für den der genannte Generator mindestens einen vorbestimmten Nennspannungswert (7) in der genannten ersten Grafik (1) und mindestens einen vorbestimmten nominalen Abwickelgeschwindigkeitswert (9) in der dritten Grafik (3) erreicht;
- wenn aus dem dritten Vergleich hervorgeht, dass der genannte festgestellte Geschwindigkeitswert kleiner als der genannte vorbestimmte maximale Geschwindigkeitswert (6) ist, die genannte dritte Betriebsart auswählen, um einen kleineren ausgegebenen Leistungswert als den genannten Nennleistungswert (7) aufzuerlegen, einen ausgeübten Spannungswert entsprechend dem genannten Nennspannungswert (8) aufzuerlegen und einen kleineren Abwickelgeschwindigkeitswert als den genannten Nenngeschwindigkeitswert (9) aufzuerlegen;
- wenn aus dem dritten Vergleich hervorgeht, dass der genannte festgestellte Geschwindigkeitswert größer als der genannte vorbestimmte Geschwindigkeitswert (6) ist, die genannte vierte Betriebsart auswählen, um einen größeren ausgegebenen Leistungswert als den oder entsprechend dem genannten Nennleistungswert (7) aufzuerlegen, einen ausgeübten Spannungswert entsprechend dem genannten Nennspannungswert (8) aufzuerlegen und einen Abwickelgeschwindigkeitswert entsprechend dem genannten Nenngeschwindigkeitswert (9) aufzuerlegen;

2. Verfahren gemäß dem vorhergehenden Patentanspruch, das **dadurch gekennzeichnet ist, dass** die genannte Phase e) die Unterphase enthält, mindestens eine erste Betriebsart des genannten Generators aufgrund des genannten ersten Betriebsbereiches (A), mindestens eine zweite Betriebsart des genannten Generators aufgrund des genannten zweiten Betriebsbereiches (B), mindestens eine dritte Betriebsart des genannten Generators aufgrund des genannten dritten Betriebsbereiches (C) und mindestens eine vierte Betriebsart aufgrund des genannten vierten Betriebsbereiches (D) zu definieren.

3. Verfahren gemäß einem beliebigen der vorhergehenden Patentansprüche, das **dadurch gekennzeichnet ist, dass** es die Phase enthält, eine übermäßige Leistungsausgabe des genannten Generators zu kontrollieren, indem die Positionierung der genannten Flügelprofile in mindestens einem Windfenster dezentriert werden, das aufgrund der genannten festgestellten Windgeschwindigkeitswerte definiert und herausgestellt wird.

## Revendications

1. Processus de gestion, réglage et contrôle au moins d'un générateur éolien de haute altitude, du type comprenant au moins une surface portante reliée opérationnellement par des tirants de commande à treuils ou d'autres mécanismes de commande du vol de la surface portante ; le processus est implémenté à travers un système comprenant :
- au moins un moyen de détection, apte à relever au moins une valeur de vitesse du vent à l'intérieur duquel les surfaces portantes du générateur sont immergées ;
- au moins un moyen de saisie apte à s'interfacer avec le moyen de détection et à saisir la valeur de vitesse relevée par ce dernier ;
- au moins un moyen d'élaboration, apte à confronter la valeur de vitesse relevée par le moyen de détection avec des valeurs de vitesse du vent préfixées et à élaborer cette comparaison en engendrant au moins une commande de contrôle à envoyer à travers un moyen de contrôle ;
- au moins un moyen de contrôle apte à recevoir la commande de contrôle envoyée par le moyen d'élaboration et à activer au moins un premier moteur d'actionnement apte à exercer une action de déroulement-enroulement sur les mécanismes de commande relatifs des tirants de commande reliés aux surfaces portantes du générateur ;
**caractérisé en ce que** le processus comprend les phases suivantes :
a) fournir au moins un premier graphique (1) des valeurs de la puissance émise par le générateur en fonction des valeurs de vitesse du vent ;
b) fournir au moins un deuxième graphique (2) des valeurs de la puissance exercée par le générateur et appropriée à l'actionnement des tirants de commande en fonction des valeurs de vitesse du vent ;
c) fournir au moins un troisième graphique (3) des valeurs de la vitesse de déroulement des tirants en fonction des valeurs de vitesse du vent ;
d) identifier dans chaque graphique (1, 2, 3) au moins une première zone de fonctionnement (A) où les valeurs de vitesse du vent sont comprises entre une vitesse du vent nulle et une valeur de vitesse minimale (4), au moins une deuxième zone de fonctionnement (B) où les valeurs de vitesse du vent sont comprises entre la valeur de vitesse minimale (4) et une valeur de vitesse de la tension maximale préfixée (5) ; au moins une troisième zone de fonctionnement (C) où les valeurs de vitesse du vent sont comprises entre la valeur de vitesse de la tension maximale préfixée (5) et au moins une valeur de vitesse de la puissance maximale préfixée (6) ; pour finir, au moins une quatrième zone de fonctionnement (D) où les valeurs de vitesse du vent sont supérieures à la valeur de vitesse de la puissance maximale préfixée (6) ;
e) définir les modes de fonctionnement du générateur, chaque mode de fonctionnement dépend de la zone de fonctionnement relative (A, B, C, D) ;
f) relever au moins une valeur de vitesse du vent ; et
g) confronter la valeur de vitesse du vent relevée avec la valeur de vitesse minimale (4) et/ou la valeur de vitesse de la tension maximale préfixée (5) et/ou la valeur de vitesse de la puissance maximale préfixée (6) puis imposer l'un des modes de fonctionnement au générateur en fonction d'une des zones de fonctionnement (A, B, C, D) identifiée par la valeur de vitesse relevée dans les graphiques (1, 2, 3) ; la phase g) comprend les sous-phases suivantes :
- exécuter une première comparaison entre la valeur de vitesse relevée et la valeur de vitesse minimale (4) indiquée dans les graphiques (1, 2, 3) ;
- s'il ressort de la première comparaison que la valeur de vitesse relevée est inférieure à la valeur minimale de vitesse (4), sélectionner le premier mode de fonctionnement pour empêcher le fonctionnement du générateur en imposant comme nulles la valeur de puissance émise, la valeur de tension exercée et la valeur de vitesse de déroulement, sinon passer à la phase suivante ;
- s'il ressort de la première comparaison que la valeur de vitesse relevée est supérieure à la valeur de vitesse minimale (4), exécuter une deuxième comparaison entre la valeur de vitesse relevée et la valeur de vitesse de la tension maximale préfixée (5) dans les graphiques (1, 2, 3) ;
- s'il ressort de la deuxième comparaison que la valeur de vitesse relevée est inférieure à la valeur de vitesse de la tension maximale préfixée (5), sélectionner le deuxième mode de fonctionnement pour ne pas empêcher le fonctionnement du générateur et imposer comme nulles la valeur de puissance émise et la valeur de vitesse de déroulement mais aussi que la valeur de tension exercée soit inférieure au moins à une valeur de tension nominale (8) préfixée dans le deuxième graphique (2), sinon passer à la phase suivante ;
- s'il ressort de la deuxième comparaison que la valeur de vitesse est supérieure à la valeur de vitesse de la tension maximale préfixée (5), exécuter une troisième comparaison entre la valeur de vitesse relevée et, au moins, la valeur de vitesse de la puissance maximale préfixée (6) dans les graphiques (1, 2, 3) pour laquelle le générateur atteint au moins une valeur de puissance nominale (7) préfixée dans le premier graphique (1) et au moins une valeur de vitesse de déroulement nominale (9) préfixée dans le troisième graphique (3) ;
- s'il ressort de la troisième comparaison que la valeur de vitesse relevée est inférieure à la valeur de vitesse de la puissance maximale préfixée (6), sélectionner le troisième mode de fonctionnement pour imposer une valeur de puissance émise inférieure à la valeur de puissance nominale (7), une valeur de tension exercée égale à la valeur de tension nominale (8) et une valeur de vitesse de déroulement inférieure à la valeur de vitesse nominale (9) ;
- s'il ressort de la troisième comparaison que la valeur de vitesse relevée est supérieure à la valeur de vitesse de la puissance maximale préfixée (6), sélectionner le quatrième mode de fonctionnement pour imposer une valeur de la puissance émise égale et/ou supérieure à la valeur de puissance nominale (7), une valeur de la tension exercée égale à la valeur de tension nominale (8) et une valeur de vitesse de déroulement égale à la valeur de vitesse nominale (9).

2. Processus selon la revendication précédente, **caractérisé en ce que** la phase e) comprend la sous-phase de définition au moins du premier mode de fonctionnement du générateur en fonction de la première zone de fonctionnement (A), au moins un deuxième mode de fonctionnement du générateur en fonction de la deuxième zone de fonctionnement (B), au moins un troisième mode de fonctionnement du générateur en fonction de la troisième zone de fonctionnement (C) et au moins un quatrième mode de fonctionnement du générateur en fonction de la quatrième zone de fonctionnement (D).

3. Processus, selon l'une des revendications précédentes, **caractérisé en ce qu'**il comprend la phase de contrôle d'une puissance excessive émise par le générateur, en décentrant le positionnement des surfaces portantes à l'intérieur au moins d'une fenêtre de vent qui a été définie et déterminée en fonction des valeurs de vitesse du vent relevées.
